# FASCICULE DE BREVET EUROPEEN

(11) **EP 1 316 366 B1**
(45) Date de publication et mention de la délivrance du brevet: **03.01.2007**
(21) Numéro de dépôt: 02292763.6
(22) Date de dépôt: 06.11.2002
(51) Int. Cl.: B05B 11/00, G01F 11/26

(54) **Dispositif pour le conditionnement et la distribution dosée d'un produit liquide**
Vorrichtung zur Aufbewahrung und dosierten Ausgabe einer Flüssigkeit
Unit for storing and dosed dispensing a liquid

(30) Priorité: 23.11.2001 FR 0115182
(43) Date de publication de la demande: 04.06.2003
(73) Titulaire: L'ORÉAL, 75008 Paris (FR)
(72) Inventeur: De LaForcade, Vincent, 78120 Rambouillet (FR)
(74) Mandataire: Leray, Noelle

(56) Documents cités:
- EP-A- 0 626 321
- US-A- 3 369 713
- US-A- 5 259 536

## Description

La présente invention concerne un dispositif pour le conditionnement et la distribution dosée d'un produit, notamment cosmétique ou de soin, tel que pouvant être utilisé par exemple pour le maquillage, le soin ou l'hygiène de la peau ou du cheveu. Une telle distribution dosée peut être recherchée, notamment pour des produits tels qu'utilisés par exemple pour le soin ou la repousse des cheveux.

Le dispositif visé par la présente invention est du type comprenant un organe de rétention délimitant une cavité doseuse, à remplir notamment par retournement total ou partiel du dispositif, la distribution du produit au moyen de la pompe se faisant en position tête en haut du dispositif. Le dispositif est par exemple équipé d'une pompe assurant la distribution du produit contenu dans la cavité doseuse, la distribution se faisant dans une position où la pompe est située au-dessus de la surface libre du liquide dans le récipient contenant le produit à distribuer.

Du brevet EP 0 626 321, il est connu un ensemble équipé d'une pompe alimentée sans tube plongeur depuis un organe de rétention comportant un fond et une paroi latérale, de diamètre extérieur inférieur au diamètre intérieur du col du récipient. L'organe de rétention comporte en outre autour de l'extrémité supérieure de sa paroi latérale des pattes souples s'évasant vers le col du récipient selon une direction faisant un angle avec la verticale, pour assurer le remplissage de l'organe de rétention. Entre deux pattes souples consécutives, on a alors une ouverture dont un bord est délimité par le bord supérieur de la paroi latérale de l'organe de rétention. Le niveau de remplissage maximum de l'organe de rétention permettant d'obtenir la dose de produit est alors déterminé par la portion des ouvertures délimitée par le bord supérieur de la paroi latérale de l'organe de rétention.

Dans la pratique, il s'avère qu'un tel dispositif ne permet pas d'assurer un bon remplissage de l'organe de rétention, et notamment lorsque l'on arrive en fin d'utilisation du contenu du dispositif. En effet, on observe une variation importante du degré de remplissage de l'organe de rétention, en fonction de la façon dont on déplace le récipient, depuis sa position retournée de façon totale ou, partielle, vers sa position de distribution, c'est-à-dire tête en haut. En outre, le niveau de remplissage étant déterminé par une portion d'ouverture formée par la paroi latérale de l'organe de rétention, la moindre inclinaison du dispositif en position remplie de l'organe de rétention fait déborder ledit organe par l'ouverture. La dose de produit retenue dans l'organe de rétention est alors inférieure à la dose maximale qui peut être retenue si bien que le niveau de remplissage n'est pas reproductible d'une utilisation à une autre.

Les brevets US 3,369,713 et US 5,259,536 décrivent des flacons permettant la distribution dosée de produit grâce à l'utilisation d'un organe de rétention qui se remplit par retournement du flacon. La dose de produit est ensuite distribuée en comprimant les parois du tube afin de créer une surpression à l'intérieur du flacon et ainsi pousser le produit hors de l'organe de rétention par un orifice de distribution.

Selon un mode de réalisation décrit dans le brevet US 3,369,713, le remplissage de l'organe de rétention est assuré par un tube disposé parallèlement à l'axe du flacon dont une première extrémité communique avec l'intérieur du récipient et une seconde extrémité libre débouche dans l'organe de rétention. Le niveau de remplissage maximal de l'organe de rétention est ainsi délimité par l'ouverture définie par cette seconde extrémité. Toutefois, dès que le flacon est incliné, du produit peut s'écouler par le tube via cette ouverture.

Le remplissage de l'organe de rétention décrit dans le brevet US 5,259,536 est également assuré par un tube disposé parallèlement à l'axe du flacon qui s'étend sur toute la hauteur axiale de l'organe de rétention et qui comporte des fentes axiales au travers desquelles peut s'écouler le produit. Le niveau de remplissage maximal de l'organe de rétention est cette fois délimité par le bord inférieur de ces fentes. Là encore, dès que le flacon est incliné, du produit peut s'écouler par le tube via ces fentes.

Aussi, est-ce un des objets de l'invention que de fournir un ensemble pour le conditionnement et la distribution dosée d'un produit liquide, et remédiant en tout ou partie aux inconvénients des dispositifs décrits ci-dessus.

C'est en particulier un objet de l'invention que de fournir un dispositif du type précité, et qui autorise une meilleure reproductibilité du niveau de remplissage de la cavité doseuse, et ce, jusqu'à sensiblement la dernière utilisation du dispositif.

C'est un autre objet de l'invention que de fournir un dispositif du type précité dont le degré de remplissage de la cavité doseuse est indépendant de la gestuelle mise en oeuvre pour provoquer le remplissage de ladite cavité doseuse.

C'est encore un autre objet de l'invention que de fournir un tel dispositif qui soit simple et fiable d'utilisation et qui soit économique à réaliser.

D'autres objets encore apparaîtront dans la description détaillée qui suit.

Selon l'invention, ces objets sont atteints en réalisant un dispositif pour le conditionnement et la distribution dosée d'un produit liquide comprenant un récipient d'axe longitudinal X comportant une ouverture au voisinage de laquelle est monté un élément de rétention délimitant une cavité doseuse dont le contenu est destiné à être distribué en position tête en haut du dispositif, le niveau de remplissage maximal de la cavité étant déterminé par un orifice en communication à la fois avec la cavité et avec le récipient, au moins une partie d'un bord délimitant l'orifice s'étendant à l'intérieur d'une paroi latérale périphérique de la cavité doseuse, à distance non nulle de cette dernière, le niveau de remplissage maximal de la cavité doseuse se situant sensiblement à la jonction entre la cavité doseuse et une portion de l'élément de rétention délimitant au moins en partie une zone de section transversale supérieure à une section transversale de la cavité au niveau de ladite jonction.

Lorsque le dispositif n'est pas incliné, la surface libre du produit contenu dans la cavité doseuse est formée dans un plan perpendiculaire à l'axe X qui correspond à un plan horizontal. Lorsque l'on incline le dispositif par rapport à l'axe X, la surface libre du produit restant toujours dans un plan horizontal, le plan perpendiculaire à l'axe X varie par rapport au plan de la surface libre, la variation d'un point du plan augmentant avec sa distance à l'axe X. Or, le point de la surface libre du produit contenu dans la cavité le plus éloigné de l'axe X se situe forcément au niveau d'au moins une partie de la paroi latérale périphérique délimitant la cavité doseuse. En particulier, lorsque la cavité doseuse est formée dans l'axe X du dispositif et qu'elle est de section transversale circulaire, toute la paroi latérale périphérique délimite les points de la surface libre les plus distants de l'axe X. Ainsi, plus l'orifice est éloigné de la paroi latérale périphérique, moins la variation de la surface libre en contact avec le bord délimitant l'orifice est importante. En conséquence, lorsque l'on incline le dispositif, il s'écoule moins de produit au travers d'un orifice situé à distance de la paroi latérale périphérique qu'au travers d'un orifice qui serait situé dans ladite paroi latérale périphérique.

En outre, lorsque la cavité doseuse est remplie de façon maximum et que l'on incline le dispositif, du produit va s'écouler dans la zone de section transversale plus grande, abaissant ainsi le niveau de la surface libre du produit par rapport au bord délimitant l'orifice. Lorsque le dispositif revient en position verticale, le produit qui s'est écoulé dans la zone de plus large section transversale retourne dans la cavité doseuse. La présence d'une telle zone qui permet de retenir du produit en position inclinée du dispositif, permet de limiter considérablement la quantité de produit s'écoulant au travers de l'orifice.

Avantageusement, la totalité du bord délimitant ledit orifice peut se situer à l'intérieur de ladite paroi latérale, à distance de cette dernière. L'orifice est ainsi plus éloigné de la paroi latérale de la cavité doseuse.

L'orifice peut s'étendre au moins pour partie en dehors d'un plan perpendiculaire audit axe X. Le niveau de remplissage maximal de la cavité est alors déterminé par la portion la plus basse du bord délimitant l'orifice. Selon cette configuration, ladite portion la plus basse du bord est la portion du bord la plus proche de l'axe X.

En particulier, l'orifice peut être formé dans un plan oblique. On choisit l'inclinaison de l'orifice de manière à ce que lorsque l'on incline le dispositif, l'ensemble de l'orifice reste au-dessus de la surface libre du produit qui s'incline de façon relative par rapport à l'orifice.

L'orifice est formé par l'extrémité libre d'un tube, de section transversale polygonale, circulaire, ovale ou en forme de haricot. Avantageusement, le tube peut s'étendre sensiblement axialement depuis un fond de la cavité jusqu'à l'extrémité libre. Le tube étant droit et s'étendant selon la verticale en position tête en haut du dispositif, le surplus de produit de la cavité s'écoule ainsi facilement dans le tube vers le récipient.

Selon un mode de réalisation de l'invention, la portion de l'élément de rétention délimitant au moins en partie la zone de section transversale plus grande peut s'étendre, à partir de la jonction, jusqu'à une paroi intérieure du récipient, ladite portion de l'élément de rétention délimitant en outre, au moins en partie, au moins un passage permettant un écoulement unidirectionnel du produit provenant du récipient vers la cavité doseuse en réponse à un retournement au moins partiel du dispositif.

Selon la présente invention, on entend par « écoulement unidirectionnel », un écoulement dont le débit est plus important lors du retournement du dispositif en position tête en bas que lors du retour en position tête en haut. En d'autres termes, la section du (ou des) passage(s) est plus grande en position tête en bas du dispositif qu'en position tête en haut. Avantageusement, on prévoit que le(s) passage(s) s'ouvre(nt) sous la pression du produit lors du retournement du dispositif et qu'il(s) se referme(nt) de manière pratiquement étanche lors du retour en position tête en haut. En d'autres termes, l'élément de rétention et en particulier la portion de l'élément de rétention délimitant en partie la zone de section transversale plus grande, ne permet pas le retour du produit écoulé au-dessus de ladite portion lors du retournement du dispositif, au travers du(des) passage(s), et ce, quelle que soit la gestuelle de retournement du dispositif, et en particulier, la vitesse d'exécution du mouvement de retournement.

La portion de l'élément de rétention délimitant en partie la zone de section transversale plus grande peut être constituée d'une membrane élastiquement déformable dont un bord périphérique s'étend jusqu'au voisinage de la paroi intérieure du récipient. La membrane peut comporter une portion apte à venir en contact avec la paroi intérieure du récipient en position tête en haut du dispositif, et à s'écarter de ladite paroi intérieure du récipient sous la pression du produit en réponse au retournement partiel.

Avantageusement, la portion de la membrane apte à venir en contact avec la paroi intérieure du récipient peut être une portion annulaire distante du bord périphérique de ladite membrane, ladite portion se situe par exemple à une distance du bord périphérique comprise entre 0,5 et 3 mm. Une telle configuration permet d'obtenir une étanchéité en position tête en haut du dispositif, quelles que soient les tolérances utilisées lors de sa fabrication.

La membrane peut avantageusement être réalisée, au moins par partie, en un matériau élastiquement déformable, notamment un matériau choisi parmi les élastomères thermoplastiques ou réticulés. Ainsi, la portion de la membrane s'appliquant contre la paroi intérieure du récipient en position tête en haut, peut facilement s'écarter de la paroi sous la pression du produit et facilement revenir s'appliquer contre la paroi lors du retour en position tête en haut.

De préférence, le matériau est choisi parmi les Silicones, les Latex naturels ou synthétiques, les EPDM, les Polyuréthanes, les mélanges de Polypropylène et de SBS, SEBS, ou EPDM, les Polyéthylènes de très basse densité, les mélanges à base de polyesters glycols (TPU) ou de Polyéther glycols (PEBA et COPE), les Chlorures de polyvinyle souples (PVC).

Avantageusement, la membrane peut présenter une épaisseur décroissante en direction de la paroi intérieure du récipient. Cette configuration permet notamment de faciliter le montage de la membrane dans le récipient et aussi de faciliter l'ouverture et la fermeture du passage.

Avantageusement encore, la portion délimitant en partie la zone de section transversale plus grande peut être inclinée en direction de la cavité doseuse. Elle peut former avec l'axe X du dispositif un angle compris entre 60 et 89°. Cette caractéristique permet de favoriser l'acheminement de tout ou partie du produit situé au-dessus de ladite portion vers la cavité doseuse.

Selon un deuxième mode de réalisation, la portion de l'élément de rétention délimitant au moins en partie la zone de section transversale plus grande peut être une paroi s'étendant, à partir de la jonction jusqu'à un bord situé au moins en partie à distance d'une paroi intérieure du récipient. La cavité doseuse est alors remplie, toujours par retournement au moins partiel du dispositif, par un passage formé entre le bord de la paroi de l'élément de rétention et la paroi interne du récipient.

Selon une configuration particulière de ce deuxième mode de réalisation, le bord de ladite paroi délimitant la zone de section transversale plus grande peut se prolonger par des pattes souples, angulairement espacées, jusqu'à une paroi intérieure du récipient. Le remplissage de la cavité doseuse se fait alors au travers des ouvertures délimitées entre deux pattes consécutives. Avantageusement, les pattes sont inclinées vers la cavité doseuse, facilitant ainsi l'acheminement du produit vers ladite cavité.

Avantageusement, l'élément de rétention peut être obtenu par moulage en une seule pièce ce qui permet notamment de le fabriquer à faible coût et de faciliter son montage dans le récipient.

L'élément de rétention peut comprendre des moyens d'accrochage montés sur un bord du récipient délimitant l'ouverture du récipient.

Selon un mode de réalisation, le dispositif peut en outre comprendre une pompe prévue pour distribuer le produit. La pompe est solidaire d'un tube plongeur dont une extrémité est située sensiblement au voisinage d'un fond de la cavité doseuse. La présence du tube plongeur autorise la réalisation d'une cavité doseuse de plus grand volume.

La pompe est de préférence solidaire d'une frette, montée fixement sur un col du récipient, notamment par encliquetage ou par vissage. Elle peut être surmontée d'un organe, notamment sous forme d'un bouton poussoir, pour actionner ladite pompe.

Le dispositif selon l'invention est particulièrement adapté pour le conditionnement et la distribution d'un produit cosmétique ou de soin, notamment pour la peau ou les cheveux, par exemple un soin nutritif des racines ou un soin cuir chevelu.

L'invention consiste, mis à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- la figure 1 représente une section partielle axiale d'un dispositif selon un premier mode de réalisation de l'invention ;
- les figures 2A et 2B représentent respectivement une vue de dessus et une coupe axiale de l'élément de rétention du dispositif représenté à la figure 1 ;
- les figures 3A à 3C illustrent différentes étapes du remplissage de la cavité doseuse du premier mode de réalisation du dispositif représenté à la figure 1 ;
- les figures 4A et 4B illustrent le dispositif représenté à la figure 1, après remplissage de la cavité doseuse, incliné selon différents angles ;
- les figures 5A et 5B représentent une section partielle axiale d'un deuxième mode de réalisation du dispositif selon l'invention, respectivement en position droite et en position inclinée ; et
- la figure 5C représente une vue de dessus de l'élément de rétention du second mode de réalisation du dispositif représenté aux figures 5A et 5B.

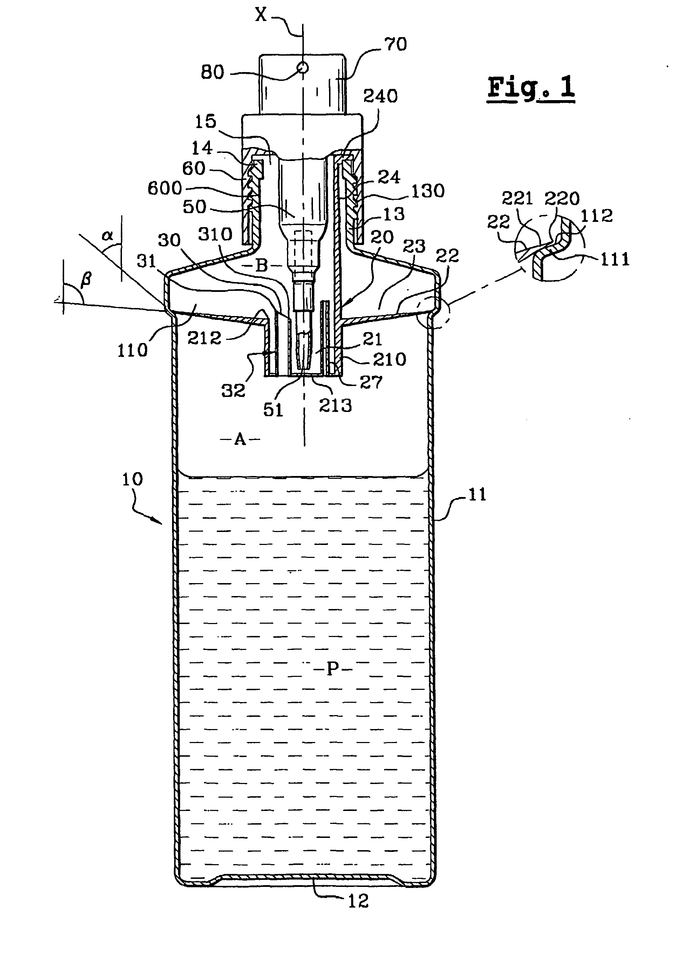

Le dispositif représenté à la figure 1 comprend un récipient 10 d'axe X prévu pour recevoir du produit P et présentant un corps 11 sensiblement cylindrique et de section transversale circulaire, dont une extrémité est fermée par un fond 12. Une extrémité opposée au fond présente un col 13 dont un bord libre 14 délimite une ouverture 15 au voisinage de laquelle est monté, dans l'axe X du récipient, un élément de rétention 20. La surface extérieure du col 13 comprend un filetage 130, apte à coopérer avec un filetage 600 prévu sur la surface intérieure d'une frette de montage 60. L'élément de rétention délimite une cavité doseuse 21 dont le contenu est destiné à être distribué en position tête en haut du dispositif, par tout moyen connu de l'homme du métier permettant une distribution tête en haut.

De préférence, une pompe 50 est prévue pour distribuer le produit. La pompe 50 est alimentée depuis l'élément de rétention 20 qui sera décrit en détail ultérieurement. La pompe est fixée au récipient 10, via la frette de montage 60. Un organe d'actionnement sous forme d'un bouton poussoir 70 permet l'actionnement de la pompe et la sortie du produit au travers d'au moins un orifice de sortie 80.

Les éléments constitutifs du dispositif, notamment le récipient 10, l'élément de rétention 20, la pompe 50, la frette 60, et le bouton poussoir 70, peuvent être obtenus de moulage d'un matériau thermoplastique, notamment un polypropylène ou un polyéthylène.

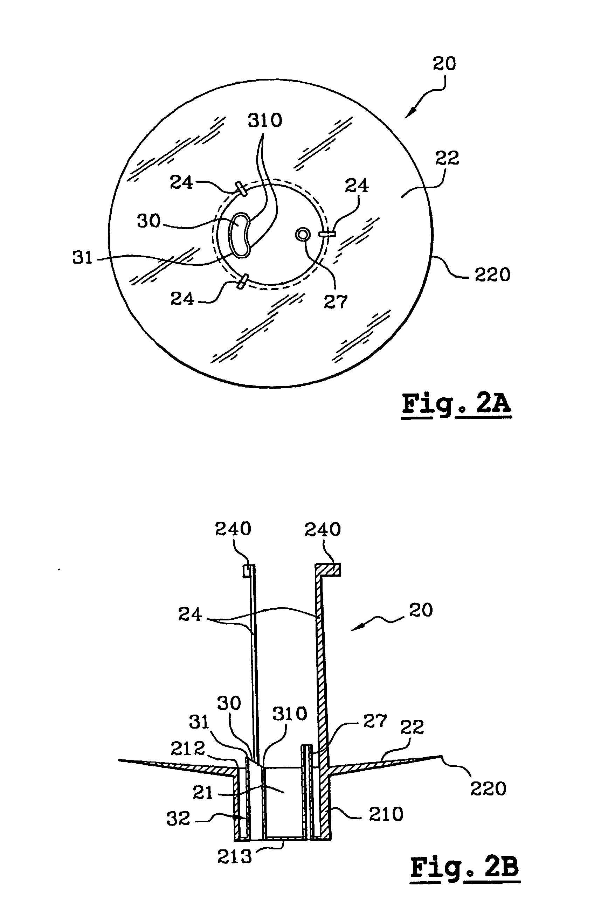

L'élément de rétention 20 représenté de façon isolée aux figures 2A et 2B et placé à l'intérieur du dispositif à la figure 1, comprend une paroi latérale périphérique continue 210 fermée à une extrémité par un fond 213. La paroi latérale 210 est un cylindre de section transversale circulaire et le fond est un disque plan. La paroi latérale peut avoir toute autre forme, ainsi que le fond qui peut par exemple être concave ou présenter un profil en U. La paroi latérale 210 se prolonge axialement par des pattes d'accrochage 24, par exemple trois pattes régulièrement espacées, qui se terminent chacune par un rebord 240 prenant appui sur le bord libre 14 du col du récipient 10.

A l'opposé du fond 213, la paroi latérale 210 se termine par une seconde extrémité 212 depuis laquelle s'étend sensiblement transversalement une membrane 22, jusqu'à une paroi intérieure 110 du récipient. Comme on le voit à la figure 1, la membrane sépare une première zone A du récipient dans laquelle séjourne le produit P lorsque le dispositif est en position tête en haut, d'une seconde zone B adjacente à l'ouverture 15 du récipient.

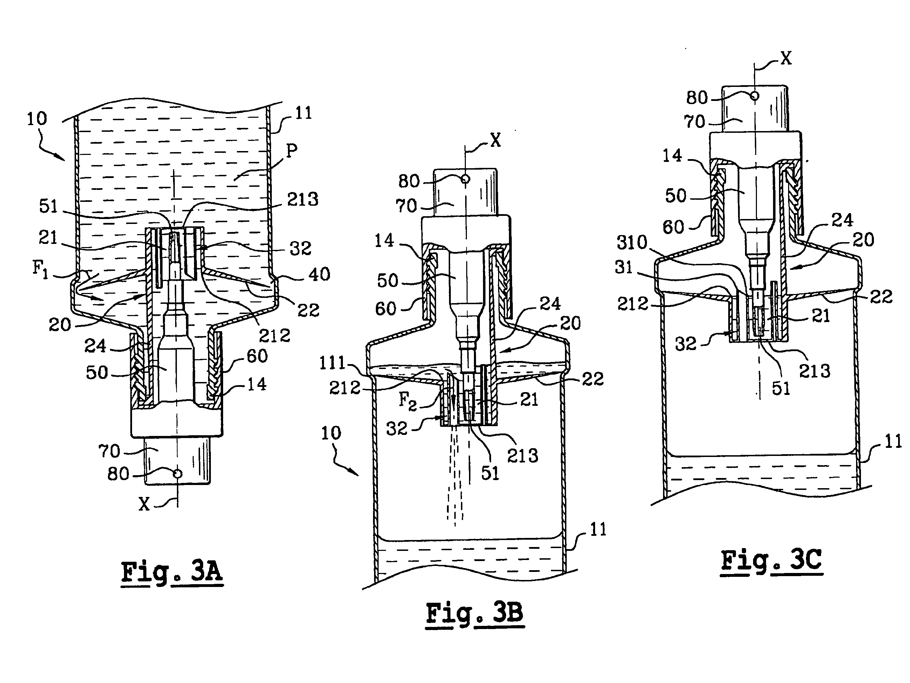

Lorsque le dispositif est en position tête en haut, la membrane 22 définit avec une portion de la paroi intérieure 110 du récipient une zone 23 de section transversale supérieure à la section transversale de la cavité doseuse au niveau du bord 212. La membrane 22 est en outre apte à délimiter en combinaison avec la paroi intérieure 110 du récipient un passage annulaire 40, représenté uniquement à la figure 3A. La membrane 22 est configurée de manière à permettre un écoulement unidirectionnel du produit vers la cavité doseuse en réponse à un retournement au moins partiel du dispositif, au travers du passage annulaire 40.

Selon un mode préférentiel de l'invention, la membrane 22 est une membrane élastiquement déformable. Un bord périphérique 220 de la membrane s'étend jusqu'au voisinage de la paroi intérieure 110 du récipient comme on le voit sur la figure 1. La membrane comprend une portion annulaire 221 qui est apte à venir en contact, de préférence de manière sensiblement étanche, avec un épaulement, décrit ultérieurement, prévu dans la paroi intérieure 110 du récipient en position tête en haut du dispositif. Le terme sensiblement étanche traduit le fait que l'essentiel du produit passé au-dessus de la membrane ne peut s'écouler dans le récipient lors du retour en position tête en haut. Sous la pression du produit en réponse au retournement partiel du dispositif, la membrane s'écarte de la paroi de manière à délimiter, avec la paroi intérieure 110, le passage 40.

La membrane est réalisée en matériau élastiquement déformable choisi parmi, par exemple, les élastomères thermoplastiques ou réticulés. A titre d'exemple, on peut citer notamment, les Silicones, les Latex naturels ou synthétiques, les EPDM, les Polyuréthanes, les mélanges de Polypropylène et de SBS, SEBS, ou EPDM, les Polyéthylènes de très basse densité, les mélanges à base de polyesters glycols (TPU) ou de Polyéther glycols (PEBA et COPE), les Chlorures de polyvinyle souples (PVC). De préférence, un tel matériau a une dureté comprise entre 20 Shore A et 40 Shore D, de préférence, entre 40 Shore A et 75 Shore A. Son élasticité peut aller de 0,5 à 5 MPa, et de préférence, de 0,8 à 2 MPa (contrainte de traction à 100 % d'allongement). On choisit par exemple un élastomère de Silicone.

Avantageusement, la membrane 22 est inclinée en direction de la cavité doseuse 21. Elle forme avec l'axe longitudinal X du dispositif, un angle β par exemple égal à environ 85°. Cette inclinaison contribue à acheminer le produit vers la cavité doseuse.

Afin que pratiquement tout le produit s'étant écoulé au travers du passage 40 dans la zone B du récipient soit acheminé vers la cavité doseuse 21, on utilise préférentiellement une membrane formant une couronne continue, sans interruption.

La paroi intérieure 110 du récipient forme un épaulement 111 destiné à recevoir la portion 221 de la membrane lorsque le dispositif est en position tête en haut. De préférence, la surface interne supérieure 112 de l'épaulement présente un angle α avec l'axe longitudinal du récipient par exemple égal à environ 60° de manière à recevoir la portion 221 de la membrane et à la maintenir inclinée.

Pour faciliter le montage de l'élément de rétention dans le dispositif, la membrane présente une épaisseur décroissante en direction de la paroi intérieure du récipient.

Selon une variante de ce mode de réalisation de l'invention non représentée, la membrane est pourvue d'au moins un clapet qui est apte à s'ouvrir sous la pression du produit en réponse au retournement partiel du dispositif et à se refermer lors du retour du dispositif en position tête en haut.

Le système de trop-plein de la cavité doseuse selon l'invention est un tube 32, ouvert à ses deux extrémités, de section transversale en forme de haricot. Le tube 32 s'étend à partir du fond 213 de la cavité selon un axe parallèle à l'axe X, jusqu'à une extrémité libre 31 qui délimite un orifice 30. Du fait de la présence de la pompe 50 dans l'axe X, le tube de trop-plein 32 est situé sensiblement à distance de l'axe X. Mais il est évident qu'avec un arrangement différent du système de distribution du produit, le tube de trop-plein 32 pourrait être formé dans l'axe X. L'orifice 30 est avantageusement formé dans un plan oblique, incliné par rapport au plan perpendiculaire à l'axe X, la portion la plus basse 310 du bord 31 qui délimite l'orifice 30 déterminant alors la hauteur de remplissage maximal de la cavité doseuse. Typiquement, le volume de la cavité doseuse est de l'ordre de quelques millilitres.

La portion inférieure 310 du bord 31 délimitant le niveau de remplissage maximal de la cavité doseuse est la portion du bord située la plus près de l'axe X, à savoir la portion de bord la plus éloignée de la paroi latérale périphérique 210.

En outre, la portion la plus basse 310 du bord 31 qui délimite la hauteur de remplissage maximal de la cavité doseuse se situe avantageusement à une hauteur axiale correspondant sensiblement à la hauteur axiale de la seconde extrémité 212 de la paroi latérale 210 depuis laquelle s'étend la membrane 22. Ainsi, la zone 23 de section transversale plus grande est formée à la hauteur axiale correspondant au niveau de remplissage maximal de la cavité doseuse.

Un tube de passage d'air 27 est avantageusement prévu dans la cavité doseuse afin d'accélérer le remplissage de la cavité doseuse ainsi que sa vidange en favorisant le passage d'air entre les deux zones délimitées par la membrane. Le tube de passage d'air 27 est formé à l'intérieur de la cavité selon un axe parallèle à l'axe X, et débouche au-dessus de l'extrémité libre 31 délimitant l'orifice de trop-plein de sorte qu'il ne joue pas sur le niveau de remplissage maximal de la cavité doseuse.

Le montage du dispositif se fait de la façon suivante. L'élément de rétention 20 est obtenu par moulage et formé d'une seule pièce. La membrane est moulée avec un angle de 90° avec la paroi latérale 210 de la cavité doseuse. Il est évident qu'elle peut être moulée avec un angle inférieur de manière à obtenir l'inclinaison en direction de la cavité doseuse. Après remplissage du récipient par le produit P, l'élément de rétention 20 est entré dans le récipient 10 par le col 13, jusqu'au moment où le rebord 240 prend appui sur le col 13 du récipient 10. L'inclinaison de la membrane vers la cavité doseuse est obtenue par le fait que portion 221 de la membrane s'applique sur la surface interne supérieure 112 de l'épaulement 111 inclinée de 60°. La pompe 50 est alors positionnée à l'intérieur du récipient 10.

Les figures 3A-3C auxquelles il est maintenant fait référence, illustrent différentes étapes du remplissage de la cavité doseuse du dispositif qui vient d'être décrit en référence à la figure 1.

A la figure 3A, le dispositif est retourné tête en bas de sorte que le poids du produit P ainsi que la souplesse de la membrane autorise cette dernière à fléchir en direction de l'ouverture du récipient. Le passage 40 est ainsi délimité entre ledit bord périphérique 220 et la paroi intérieure 110 du récipient. Le produit P s'écoule au travers du passage 40 comme cela est matérialisé par la flèche F1. Si la quantité résiduelle de produit est suffisante, une partie du produit P peut également s'écouler au travers du tube 32 à l'intérieur de la cavité doseuse 21. Une partie de la zone B est alors remplie de produit P. Cette zone B est dimensionnée de sorte que son volume est significativement plus grand que celui de la cavité doseuse.

Lors du retournement du dispositif de la position tête en bas de la figure 3A vers la position tête en haut de la figure 3B, la membrane reprend sa position initiale sous l'effet combiné du poids du produit et de l'élasticité du matériau la formant. La membrane s'applique alors sur l'épaulement 111 de sorte que le passage 40 se referme. Le produit P présent au-dessus de la membrane s'écoule alors à l'intérieur de la cavité doseuse 21. Tout produit en excès dans la cavité doseuse 21 retombe dans la zone A du récipient 10 par débordement via l'orifice 30, comme cela est matérialisé par la flèche F2. Le volume maximal de la cavité doseuse est obtenu lorsque la surface libre du produit dans la cavité doseuse 21 atteint la portion la plus basse 310 de l'extrémité libre 31 du tube comme on l'a illustré à la figure 3C. La cavité doseuse est ainsi remplie toujours sensiblement de la même manière, et ce, quelles que soient les conditions de retournement du récipient de la position tête en bas vers la position tête en haut.

Ensuite, il reste à distribuer le contenu de la cavité doseuse 21 au moyen de la pompe 50, laquelle est actionnée au moyen du bouton poussoir 70, le produit passant dans la pompe 50 via le tube plongeur 51 dont l'extrémité libre se trouve au fond de la cavité doseuse 21.

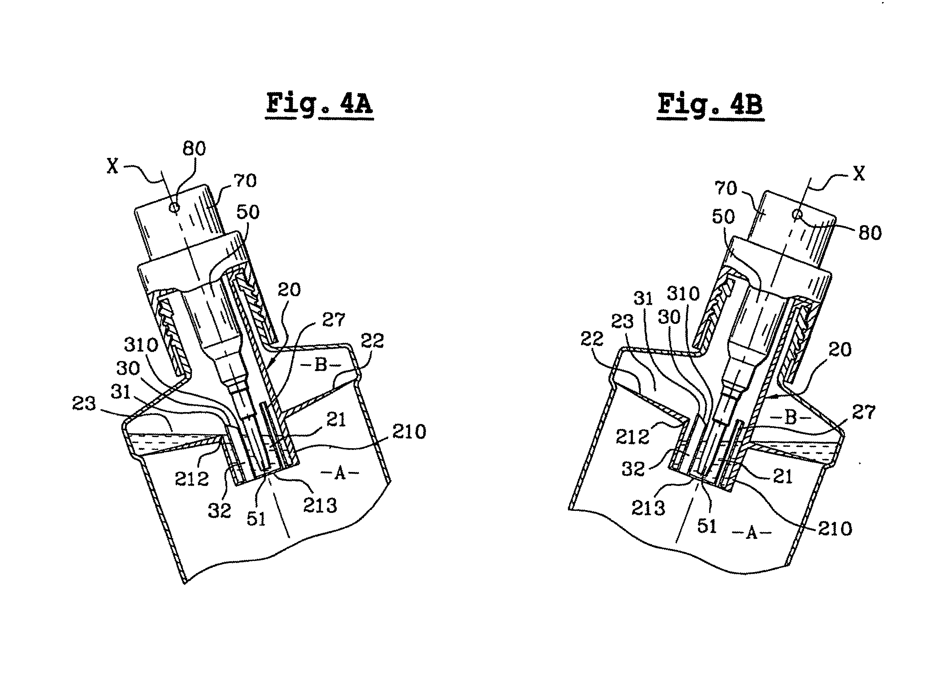

Il arrive parfois que, après avoir rempli la cavité doseuse à son maximum mais avant de distribuer le contenu de la cavité doseuse, l'utilisateur incline le dispositif par rapport à son axe X comme on l'a illustré sur les figures 4A et 4B auxquelles il est maintenant fait référence. Quel que soit l'angle d'inclinaison, par rapport à la verticale, le produit retenu dans la cavité doseuse 21 ne peut s'écouler par l'orifice 30 délimité par l'extrémité libre 31 du tube 30.

En effet, lorsque le dispositif est incliné du côté du tube 32, comme on l'a illustré à la figure 4A, le produit contenu dans la cavité doseuse 21 s'écoule dans la partie de la zone 23 située du côté du tube 32, abaissant ainsi le niveau de la surface libre du produit en contact avec la portion la plus basse 310 de l'extrémité libre 31 du tube. Le produit ne peut alors pas atteindre l'orifice 30. Même si l'utilisateur distribue le produit dans cette position, tout le produit retenu initialement dans la cavité doseuse sera distribué car au fur et à mesure de la distribution du produit se trouvant encore dans la cavité doseuse, le produit qui se trouve dans la zone 23 s'écoule de nouveau dans la cavité doseuse au fur et à mesure qu'elle se vide.

Lorsque le dispositif est incliné du côté opposé au tube 32, comme on l'a illustré à la figure 4B, le produit contenu dans la cavité doseuse 21 s'écoule dans la partie de la zone 23 située à l'opposé du tube 32 s'éloignant ainsi également de l'orifice.

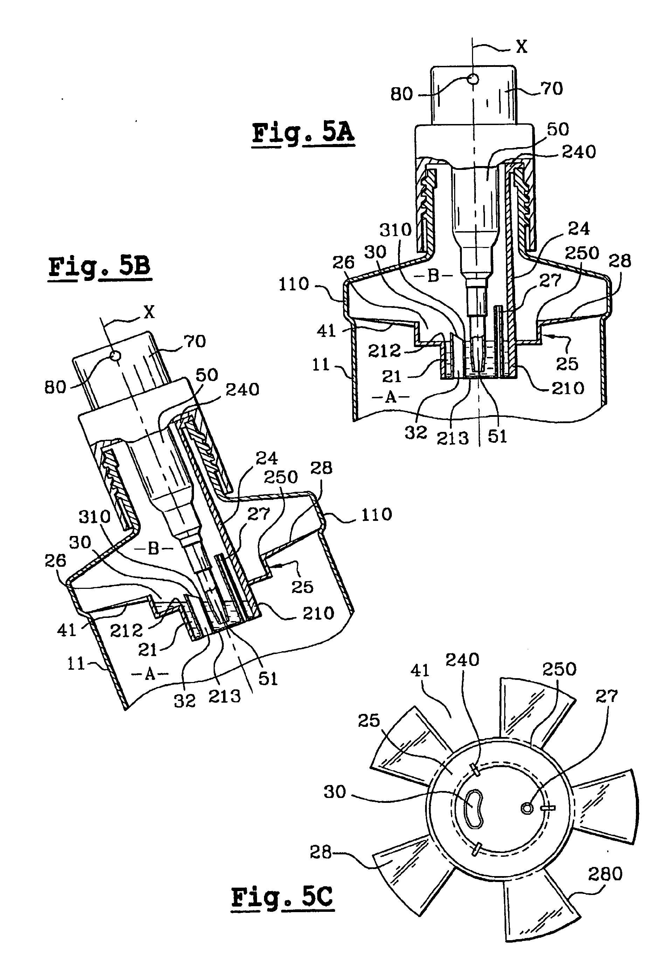

Aux figures 5A à 5C, on a illustré un second mode de réalisation du dispositif de l'invention qui diffère de celui qui vient d'être décrit en particulier en ce que l'élément de rétention 20, illustré seul à la figure 5C, ne comprend pas de membrane.

Selon ce mode de réalisation, la paroi latérale périphérique 210 de la cavité doseuse se termine, à l'opposé du fond 213, par une seconde extrémité 212 depuis laquelle s'étend cette fois une paroi 25 sensiblement rigide. La paroi 25 est une paroi continue qui comprend une première portion annulaire formée sensiblement transversalement à l'axe X, à l'extrémité de laquelle est formée une seconde portion, selon l'axe X, qui se termine par un bord 250. Le bord 250 est situé à distance de la paroi intérieure 110 du récipient. La paroi 25 délimite une zone 26, de section transversale supérieure à la section transversale de la cavité doseuse au niveau de la jonction 212.

A partir du bord 250 de la paroi 25, des pattes souples 28 sont formées sensiblement transversalement à l'axe X et s'étendent radialement, jusqu'à la paroi intérieure 110 du récipient. Les pattes souples sont avantageusement inclinées vers la cavité doseuse 21 et munies de rebords 280 sur leurs bordures radiales. Des passages 41 sont délimités entre deux pattes souples consécutives. La paroi 25 et les pattes souples 28 séparent une première zone A du récipient dans laquelle séjourne le produit P lorsque le dispositif est en position tête en haut, d'une seconde zone B adjacente à l'ouverture 15 du récipient.

Le reste du dispositif est identique à celui décrit en conformité avec la figure 1.

Pour remplir la cavité doseuse 21, on retourne le dispositif pour le mettre tête en bas de manière à ce que le produit séjournant dans la zone A du récipient s'écoule dans la zone B par les passages 41. En retournant le dispositif en position tête en haut, le produit se trouvant dans la zone B est acheminé vers la cavité doseuse 21 grâce notamment aux pattes souples 28 inclinées vers ladite cavité, les rebords 280 améliorant en outre le guidage du produit vers la cavité. Le produit s'écoule alors par l'orifice de trop-plein 30 jusqu'à ce que la surface libre du produit atteigne la portion la plus basse 310 de l'extrémité libre du tube 32, comme on l'a représenté à la figure 5A, de manière à ce que seule la cavité doseuse 21 soit remplie.

De la même manière que pour le mode de réalisation décrit en conformité avec la figure 1, lorsque l'utilisateur incline le dispositif du côté du tube 32, comme on l'a illustré à la figure 5B, le produit contenu dans la cavité doseuse 21 s'écoule dans la zone 26 située du côté du tube 32, abaissant ainsi le niveau du produit en contact avec la portion la plus basse 310 de l'extrémité libre du tube. Le produit ne peut alors pas atteindre l'orifice 30.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après.

## Revendications

1. - Dispositif pour le conditionnement et la distribution dosée d'un produit liquide comprenant un récipient (10) d'axe longitudinal X comportant une ouverture (15) au voisinage de laquelle est monté un élément de rétention (20) délimitant une cavité doseuse (21) dont le contenu est destiné à être distribué en position tête en haut du dispositif, le niveau de remplissage maximal de la cavité (21) étant déterminé par un orifice (30) en communication à la fois avec la cavité (21) et avec le récipient (10), au moins une partie d'un bord (31) délimitant l'orifice s'étendant à l'intérieur d'une paroi latérale périphérique (210) de la cavité doseuse, à distance non nulle de cette dernière, **caractérisé en ce que** le niveau de remplissage maximal de la cavité (21) se situe sensiblement à la jonction (212) entre la cavité doseuse (21) et une portion (22; 25) de l'élément de rétention délimite au moins en partie une zone (23; 26) de section transversale supérieure à une section transversale de la cavité (21) au niveau de ladite jonction (212).

2. - Dispositif selon la revendication 1, **caractérisé en ce que** la totalité du bord (31) délimitant ledit orifice (30) se situe à l'intérieur de ladite paroi latérale périphérique (210), à distance de cette dernière.

3. - Dispositif selon l'une quelconque des revendications précédentes, **caractérisé en ce que** ledit orifice (30) s'étend au moins pour partie en dehors d'un plan perpendiculaire audit axe X.

4. - Dispositif selon la revendication 3, **caractérisé en ce que** l'orifice (30) est formé dans un plan oblique.

5. - Dispositif selon la revendication 2 ou 3, **caractérisé en ce que** le niveau de remplissage maximal de la cavité doseuse (21) est défini par la portion (310) dudit bord (31) la plus proche de l'axe X.

6. - Dispositif selon l'une quelconque des revendications précédentes, **caractérisé en ce que** l'orifice (30) est formé par l'extrémité libre (31) d'un tube (32), de section transversale polygonale, circulaire, ovale ou en forme de haricot.

7. - Dispositif selon la revendication 6, **caractérisé en ce que** le tube (32) s'étend sensiblement axialement depuis un fond (213) de la cavité jusqu'à l'extrémité libre (31).

8. - Dispositif selon l'une quelconque des revendications précédentes, **caractérisé en ce que** la portion (22) de l'élément de rétention délimitant au moins en partie la zone (23) s'étend, à partir de la jonction (212), jusqu'à une paroi intérieure (110) du récipient, ladite portion (22) de l'élément de rétention délimitant en outre au moins en partie au moins un passage (40) permettant un écoulement unidirectionnel du produit provenant du récipient vers la cavité doseuse (21) en réponse à un retournement au moins partiel du dispositif.

9. - Dispositif selon la revendication 8, **caractérisé en ce que** ladite portion (22) de l'élément de rétention est constituée d'une membrane élastiquement déformable dont un bord périphérique (220) s'étend jusqu'au voisinage de la paroi intérieure (110) du récipient, ladite membrane comportant une portion (221) apte à venir en contact avec la paroi intérieure (110) du récipient en position tête en haut du dispositif, et à s'écarter de ladite paroi sous la pression du produit en réponse au retournement partiel.

10. - Dispositif selon la revendication 9, **caractérisé en ce que** ladite portion (221) de la membrane apte à venir en contact avec la paroi intérieure du récipient (110) est une portion annulaire distante du bord périphérique (220) de ladite membrane.

11. - Dispositif selon l'une quelconque des revendications 9 ou 10, **caractérisé en ce que** ladite membrane est réalisée en un matériau élastiquement déformable, notamment un matériau choisi parmi les élastomères thermoplastiques ou réticulés.

12. - Dispositif selon la revendication 11, **caractérisé en ce que** le matériau est choisi parmi les Silicones, les Latex naturels ou synthétiques, les EPDM, les Polyuréthanes, les mélanges de Polypropylène et de SBS, SEBS ou EPDM, les Polyéthylènes de très basse densité, les mélanges à base de polyesters glycols (TPU) ou de Polyéther glycols (PEBA et COPE), les Chlorures de polyvinyle souples (PVC).

13. - Dispositif selon l'une quelconque des revendications 9 à 12, **caractérisé en ce que** ladite membrane présente une épaisseur décroissante en direction de la paroi intérieure (110) du récipient.

14. - Dispositif selon l'une quelconque des revendications 8 à 13, **caractérisé en ce que** ladite portion (22) de l'élément de rétention est inclinée en direction de la cavité doseuse (21).

15. - Dispositif selon la revendication 14, **caractérisé en ce que** ladite portion (22) de l'élément de rétention forme avec l'axe X un angle compris entre 60 et 89°.

16. - Dispositif selon l'une quelconque des revendications 1 à 7, **caractérisé en ce que** la portion (25) de l'élément de rétention délimitant au moins en partie la zone (26) est une paroi s'étendant, à partir de la jonction (212) jusqu'à un bord (250) situé au moins en partie à distance d'une paroi intérieure du récipient.

17. - Dispositif selon la revendication 16, **caractérisé en ce que** la paroi (25) se prolonge radialement, à partir du bord (250), par des pattes souples (28) angulairement espacées, jusqu'à la paroi intérieure (110) du récipient.

18. - Dispositif selon la revendication 17, **caractérisé en ce que** les pattes souples (28) sont inclinées vers la cavité doseuse (21).

19. - Dispositif selon l'une quelconque des revendications précédentes, **caractérisé en ce que** ledit élément de rétention (20) est obtenu par moulage en une seule pièce.

20. - Dispositif selon l'une quelconque des revendications précédentes, **caractérisé en ce que** l'élément de rétention (20) comprend des moyens d'accrochage (24) montés sur un bord (14) du récipient (10) délimitant ladite ouverture (15).

21. - Dispositif selon l'une quelconque des revendications précédentes, **caractérisé en ce qu**'il comprend en outre une pompe (50) prévue pour distribuer le produit (P), ladite pompe étant solidaire d'un tube plongeur (51) dont une extrémité est située sensiblement au voisinage d'un fond (213) de la cavité doseuse (21).

22. - Dispositif selon la revendication 21, **caractérisé en ce que** la pompe (50) est solidaire d'une frette (60), montée fixement sur un col (13) du récipient, notamment par encliquetage ou par vissage.

23. - Dispositif selon l'une quelconque des revendications 21 à 22, **caractérisé en ce que** ladite pompe (50) est surmontée d'un organe, notamment sous forme d'un bouton poussoir (70), pour actionner ladite pompe.

24. - Utilisation d'un dispositif selon l'une quelconque des revendications qui précèdent pour le conditionnement et la distribution d'un produit cosmétique ou de soin (P), notamment pour la peau ou les cheveux.

## Claims

1. Device for the packaging and metered dispensing of a liquid product comprising a container (10) of longitudinal axis X that includes an opening (15) in whose vicinity is mounted a retaining element (20) delimiting a metering cavity (21), the contents of which are to be dispensed in the head-up position of the device, the maximum filling level of the cavity (21) being determined by an orifice (30) communicating both with the cavity (21) and with the container (10), at least a part of an edge (31) delimiting the orifice extending inside a peripheral lateral wall (210) of the metering cavity, at a non-zero distance from the latter, **characterized in that** the maximum filling level of the cavity (21) is located substantially at the junction (212) between the metering cavity (21) and a portion (22; 25) of the retaining element delimiting at least partially a zone (23; 26) whose transverse section is greater than a transverse section of the cavity (21) at said junction (212).

2. Device according to Claim 1, **characterized in that** the entire edge (31) delimiting said orifice (30) is located inside said peripheral lateral wall (210), at a distance from the latter.

3. Device according to either one of the preceding claims, **characterized in that** said orifice (30) extends at least partially outside a plane perpendicular to said axis X.

4. Device according to Claim 3, **characterized in that** the orifice (30) is formed in an oblique plane.

5. Device according to Claim 2 or 3, **characterized in that** the maximum filling level of the metering cavity (21) is defined by the portion (310) of said edge (31) closest to the axis X.

6. Device according to any one of the preceding claims, **characterized in that** the orifice (30) is formed by the free end (31) of a tube (32), of polygonal, circular, oval or kidney-shaped cross section.

7. Device according to Claim 6, **characterized in that** the tube (32) extends substantially axially from a bottom (213) of the cavity to the free end (31).

8. Device according to any one of the preceding claims, **characterized in that** the portion (22) of the retaining element delimiting at least partially the zone (23) extends, from the junction (212), as far as an interior wall (110) of the container, said portion (22) of the retaining element also delimiting at least partially at least one passage (40) allowing a one-way flow of the product originating from the container towards the metering cavity (21) in response to an at least partial inversion of the device.

9. Device according to Claim 8, **characterized in that** said portion (22) of the retaining element consists of an elastically deformable diaphragm, a peripheral edge (220) of which extends up to the vicinity of the interior wall (110) of the container, said diaphragm comprising a portion (221) capable of coming into contact with the interior wall (110) of the container when the device is in the head-up position, and of moving away from said wall under the pressure of the product in response to the partial inversion.

10. Device according to Claim 9, **characterized in that** said portion (221) of the diaphragm capable of coming into contact with the interior wall of the container (110) is an annular portion distant from the peripheral edge (220) of said diaphragm.

11. Device according to either one of Claims 9 and 10, **characterized in that** said diaphragm is made of an elastically deformable material, in particular a material chosen from thermoplastic or crosslinked elastomers.

12. Device according to Claim 11, **characterized in that** the material is chosen from silicones, natural or synthetic latices, EPDMs, polyurethanes, blends of polypropylene and SBS, SEBS or EPDM, very low-density polyethylenes, blends based on polyester glycols (TPU) or on polyether glycols (PEBA and COPE), and flexible polyvinyl chlorides (PVCs).

13. Device according to any one of Claims 9 to 12, **characterized in that** said diaphragm has a thickness that decreases towards the interior wall (110) of the container.

14. Device according to any one of Claims 8 to 13, **characterized in that** said portion (22) of the retaining element is tilted towards the metering cavity (21).

15. Device according to Claim 14, **characterized in that** said portion (22) of the retaining element forms an angle of between 60° and 89° with the axis X.

16. Device according to any one of Claims 1 to 7, **characterized in that** the portion (25) of the retaining element delimiting at least partially the zone (26) is a wall extending from the junction (212) to an edge (250) located at least partially at a distance from an interior wall of the container.

17. Device according to Claim 16, **characterized in that** the wall (25) extends radially, from the edge (250), via angularly spaced flexible tabs (28), as far as the interior wall (110) of the container.

18. Device according to Claim 17, **characterized in that** the flexible tabs (28) are tilted towards the metering cavity (21).

19. Device according to any one of the preceding claims, **characterized in that** said retaining element (20) is obtained by moulding as a single piece.

20. Device according to any one of the preceding claims, **characterized in that** the retaining element (20) comprises attaching means (24) mounted on an edge (14) of the container (10) delimiting said opening (15).

21. Device according to any one of the preceding claims, **characterized in that** it also comprises a pump (50) provided in order to dispense the product (P), said pump being secured to a plunger tube (51), one end of which is located substantially in the vicinity of a bottom (213) of the metering cavity (21).

22. Device according to Claim 21, **characterized in that** the pump (50) is secured to a band (60) fixedly mounted on a neck (13) of the container, particularly by snap-fastening or screw-fastening.

23. Device according to any one of Claims 21 to 22, **characterized in that** said pump (50) is surmounted by a member, particularly in the form of a push-button (70), for actuating said pump.

24. Use of a device according to any one of the preceding claims for the packaging and dispensing of a cosmetic or care product (P), particularly for the skin or for the hair.

## Patentansprüche

1. Vorrichtung zur Verpackung und zur dosierten Ausgabe eines flüssigen Produkts, mit einem Behälter (10) mit einer Längsachse X, der eine Öffnung (15) aufweist, in deren Nähe ein Aufnahmeelement (20) montiert ist, das einen Dosierhohlraum (21) begrenzt, dessen Inhalt in der aufrechten Stellung der Vorrichtung ausgegeben werden soll, wobei der maximale Füllpegel des Hohlraums (21) durch eine Öffnung (30) bestimmt wird, die sowohl mit dem Hohlraum (21) aus auch mit dem Behälter (10) in Verbindung steht, wobei mindestens ein Teil eines die Öffnung begrenzenden Rands (31) sich innerhalb einer Umfangsseitenwand (210) des Dosierhohlraums in einem Abstand ungleich Null zu dieser letzteren erstreckt, **dadurch gekennzeichnet, dass** der maximale Füllpegel des Hohlraums (21) sich im Wesentlichen an der Verbindungsstelle (212) zwischen dem Dosierhohlraum (21) und einem Abschnitt (22; 25) des Aufnahmeelements befindet, der zumindest zum Teil eine Zone (23; 26) mit einem Querschnitt begrenzt, der größer ist als ein Querschnitt des Hohlraums (21) in Höhe der Verbindungsstelle (212).

2. Vorrichtung nach Anspruch 1, **dadurch gekennzeichnet, dass** die Gesamtheit des Rands (31), der die Öffnung (30) begrenzt, sich innerhalb der Umfangsseitenwand (210) in Abstand zu dieser befindet.

3. Vorrichtung nach einem der vorhergehenden Ansprüche, **dadurch gekennzeichnet, dass** die Öffnung (30) sich mindestens teilweise außerhalb einer Ebene lotrecht zur Achse X befindet.

4. Vorrichtung nach Anspruch 3, **dadurch gekennzeichnet, dass** die Öffnung (30) in einer schrägen Ebene ausgebildet ist.

5. Vorrichtung nach Anspruch 2 oder 3, **dadurch gekennzeichnet, dass** der maximale Füllpegel des Dosierhohlraums (21) von dem Abschnitt (310) des Rands (31) definiert wird, der der Achse X am nächsten liegt.

6. Vorrichtung nach einem der vorhergehenden Ansprüche, **dadurch gekennzeichnet, dass** die Öffnung (30) vom freien Ende (31) eines Rohrs (32) mit einem polygonalen, kreisförmigen, ovalen oder bohnenförmigen Querschnitt gebildet wird.

7. Vorrichtung nach Anspruch 6, **dadurch gekennzeichnet, dass** das Rohr (32) sich im Wesentlichen axial von einem Boden (213) des Hohlraums bis zum freien Ende (31) erstreckt.

8. Vorrichtung nach einem der vorhergehenden Ansprüche, **dadurch gekennzeichnet, dass** der Abschnitt (22) des Aufnahmeelements, der zumindest zum Teil die Zone (23) begrenzt, sich ausgehend von der Verbindungsstelle (212) bis zu einer Innenwand (110) des Behälters erstreckt, wobei der Abschnitt (22) des Aufnahmeelements außerdem zumindest zum Teil mindestens einen Durchlass (40) begrenzt, der ein Einweg-Fließen des vom Behälter kommenden Produkts zum Dosierhohlraum (21) als Reaktion auf ein zumindest teilweises Umdrehen der Vorrichtung ermöglicht.

9. Vorrichtung nach Anspruch 8, **dadurch gekennzeichnet, dass** der Abschnitt (22) des Aufnahmeelements aus einer elastisch verformbaren Membran besteht, von der ein Umfangsrand (220) sich bis in die Nähe der Innenwand (110) des Behälters erstreckt, wobei die Membran einen Abschnitt (221) aufweist, der in der aufrechten Stellung der Vorrichtung in Kontakt mit der Innenwand (110) des Behälters kommen und sich unter dem Druck des Produkts als Reaktion auf das teilweise Umdrehen von der Wand entfernen kann.

10. Vorrichtung nach Anspruch 9, **dadurch gekennzeichnet, dass** der Abschnitt (221) der Membran, der mit der Innenwand des Behälters (110) in Kontakt kommen kann, ein ringförmiger Abschnitt ist, der vom Umfangsrand (220) der Membran entfernt ist.

11. Vorrichtung nach einem der Ansprüche 9 oder 10, **dadurch gekennzeichnet, dass** die Membran aus einem elastisch verformbaren Material besteht, insbesondere aus einem Material, das unter den thermoplastischen oder vernetzten Elastomermaterialien ausgewählt wird.

12. Vorrichtung nach Anspruch 11, **dadurch gekennzeichnet, dass** das Material unter den Silikonen, dem natürlichen oder synthetischen Latex, den EPDM, den Polyurethanen, den Mischungen von Polypropylen und SBS, SEBS oder EPDM, den Polyethylenen sehr niederer Dichte, den Mischungen auf der Basis von Polyesterglykolen (TPU) oder Polyetherglykolen (PESA und COPE), den weichen Polyvinylchloriden (PVC) ausgewählt wird.

13. Vorrichtung nach einem der Ansprüche 9 bis 12, **dadurch gekennzeichnet, dass** die Membran eine in Richtung der Innenwand (110) des Behälters abnehmende Stärke aufweist.

14. Vorrichtung nach einem der Ansprüche 8 bis 13, **dadurch gekennzeichnet, dass** der Abschnitt (22) des Aufnahmeelements in Richtung des Dosierhohlraums (21) geneigt ist.

15. Vorrichtung nach Anspruch 14, **dadurch gekennzeichnet, dass** der Abschnitt (22) des Aufnahmeelements mit der Achse X einen Winkel zwischen 60 und 89° bildet.

16. Vorrichtung nach einem der Ansprüche 1 bis 7, **dadurch gekennzeichnet, dass** der Abschnitt (25) des Aufnahmeelements, der die Zone (26) zumindest zum Teil begrenzt, eine Wand ist, die sich ausgehend von der Verbindungsstelle (212) bis zu einem Rand (250) erstreckt, der zumindest zum Teil in Abstand von einer Innenwand des Behälters angeordnet ist.

17. Vorrichtung nach Anspruch 16, **dadurch gekennzeichnet, dass** die Wand (25) sich radial ausgehend vom Rand (250) durch winkelmäßig voneinander entfernte biegsame Laschen (28) bis zur Innenwand (110) des Behälters verlängert.

18. Vorrichtung nach Anspruch 17, **dadurch gekennzeichnet, dass** die biegsamen Laschen (28) zum Dosierhohlraum (21) geneigt sind.

19. Vorrichtung nach einem der vorhergehenden Ansprüche, **dadurch gekennzeichnet, dass** das Aufnahmeelement (20) durch Formen aus einem Stück erhalten wird.

20. Vorrichtung nach einem der vorhergehenden Ansprüche, **dadurch gekennzeichnet, dass** das Aufnahmeelement (20) Befestigungsmittel (24) aufweist, die auf einen Rand (14) des Behälters (10) montiert sind, der die Öffnung (15) begrenzt.

21. Vorrichtung nach einem der vorhergehenden Ansprüche, **dadurch gekennzeichnet, dass** sie außerdem eine Pumpe (50) aufweist, die vorgesehen ist, um das Produkt (P) auszugeben, wobei die Pumpe fest mit einem Tauchrohr (51) verbunden ist, von dem ein Ende sich im Wesentlichen in der Nähe eines Bodens (213) des Dosierhohlraums (21) befindet.

22. Vorrichtung nach Anspruch 21, **dadurch gekennzeichnet, dass** die Pumpe (50) fest mit einem Mantelring (60) verbunden ist, der ortsfest auf einen Hals (13) des Behälters montiert ist, insbesondere durch Einrasten oder Schraubverbindung.

23. Vorrichtung nach einem der Ansprüche 21 bis 22, **dadurch gekennzeichnet, dass** über der Pumpe (50) ein Organ, insbesondere in Form eines Druckknopfs (70) sitzt, um die Pumpe zu betätigen.

24. Verwendung einer Vorrichtung nach einem der vorhergehenden Ansprüche zur Verpackung und zur Ausgabe eines Kosmetik- oder Pflegeprodukts (P), insbesondere für die Haut oder die Haare.
